(19) Europäisches Patentamt
European Patent Office
Office européen des brevets

(11) Publication number: **0 093 579**
**B1**

(12) **EUROPEAN PATENT SPECIFICATION**

(45) Date of publication of patent specification: **09.12.87**

(51) Int. Cl.[4]: **C 08 F 8/20,** C 07 C 17/20, C 07 C 19/08 // C08F14/24

(21) Application number: **83302396.3**

(22) Date of filing: **27.04.83**

(54) **Process for fluorinating chlorofluoro telomers.**

(30) Priority: **03.05.82 US 374470**

(43) Date of publication of application:
**09.11.83 Bulletin 83/45**

(45) Publication of the grant of the patent:
**09.12.87 Bulletin 87/50**

(84) Designated Contracting States:
**DE FR GB IT**

(56) References cited:
**DD-B- 139 940**
**DE-B-1 246 703**
**GB-A- 676 374**
**GB-A- 761 053**
**US-A-2 886 607**
**US-A-3 632 834**

(73) Proprietor: **OCCIDENTAL CHEMICAL CORPORATION**
**P.O. Box 189**
**Niagara Falls New York 14302 (US)**

(72) Inventor: **Saran, Mohan S.**
**135 Gregory Place**
**Grand Island New York 14072 (US)**

(74) Representative: **Myerscough, Philip Boyd et al**
**J.A.Kemp & Co. 14, South Square Gray's Inn**
**London, WC1R 5EU (GB)**

**EP 0 093 579 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for fluorinating telomers of chlorotrifluoroethylene, hereinafter designated as "CTFE", to produce highly fluorinated, stable products for use as industrial fluids, oils and greases.

Telomers of CTFE are saturated low molecular weight polymers, typically having a molecular number n (the number of repeating units in the telomer chain) of 1 to 20, and can be formed by the addition polymerization reaction of CTFE with carbon tetrachloride in a solvent, such as acetonitrile, and in the presence of suitable polymerization catalysts, such as ferric chloride and benzoin. After fluorination, such telomers have a variety of practical uses as lubricants, hydraulic fluids, sealants and heat exchange fluids.

Various methods for preparing CTFE telomers are known and have been practiced commercially for many years. An article by William T. Miller, Jr. et al in *Industrial and Engineering Chemistry*, pages 333—337 (1947), entitled "Low Polymers of Chlorotrifluoroethylene", describes a process for producing low molecular weight polymers of CTFE by carrying out the polymerization in a solution of chloroform using benzoyl peroxide as a polymerization promoter. Other solvents disclosed in the reference as being useful for this purpose include carbon tetrachloride and tetrachloroethylene. The solution is heated in a pressure vessel for 1-3/4 hours at 100°C, and the unreacted CTFE monomer and chloroform are removed by distillation, leaving a "crude" telomer of general formula

$$CHCl_2(CF_2CClF)_nCl,$$

which can be further heated and distilled to yield products ranging from a light oil to a semisolid wax or grease.

US—A—2,793,201, issued May 21, 1957, discloses improved promoters for polymerizing CTFE monomer to produce low molecular weight polymers. Specific promoters disclosed in the reference include various peroxides such as bis-(trichloroacetal peroxide and bis-(perchloroacrylyl) peroxide. The use of such promoters produces a more stable polymer by eliminating the amount of reactive hydrogen present in the polymer.

Another process which has been developed for producing low molecular weight CTFE polymers is described in US—A—2,788,375, issued April 9, 1957. This process comprises reacting CTFE with a saturated organic bromo compound, such as bromotrichloromethane, in the presence of actinic light in a de-oxygenated system to obtain saturated bromopolychlorotrifluoro compounds containing one or more CTFE units per molecule. These saturated bromopolychlorofluoro compounds can then be converted to corresponding polychlorofluoro compounds by treatment with chloride, and subsequently fluorinated with common fluorinating agents such as cobalt trifluoride, manganese tetrafluoride, silver difluoride, and hydrogen fluoride, in combination with antimony catalysts, to yield more highly fluorinated products.

A more recent development in this field is described in a series of articles by Y. Pietrasanta et al entitled "Telomerization by Redox Catalysis" appearing in the *European Polymer Journal*, Vol. 12 (1976). This technology involves the reaction of a chlorinated telogen, such as carbon tetrachloride, with CTFE in the presence of benzoin and a suitable redox catalyst, such as ferric chloride hexahydrate ($FeCl_3 \cdot 6H_2O$). The telomerization reaction is suitably carried out in acetonitrile which is a common solvent for the reactants and catalysts. The "redox" method derives its name from the catalytic activity of the ferric ion during the telomerization reaction which is reduced as it "caps" the telomer with a chloride ion and is alternately oxidized as it initiates chain growth of the telomer.

The various telomerization processes described above generally result in the preparation of a "crude" telomer having the general formula

$$CCl_3(CF_2CClF)_nCl,$$

where n is typically in the range of from above 1 to about 20. It is known that such crude telomers can be stabilized by fluorination using suitable fluorinating agents. The expression "stabilized" as used herein denotes the replacement of one or more of the chlorine atoms with fluorine in the terminal group(s) of the telomer chain, and the saturation of various olefinic impurities generated during the telomerization reaction and which remain dissolved in the telomers. The telomers produced by such fluorination are highly stable in corrosive environments and are essentially non-flammable in oxidizing atmospheres.

It is known in the prior art that telomers of CTFE can be fluorinated using a variety of fluorinating agents. Thus, the use of cobalt trifluoride for this purpose is discussed in *Industrial and Engineering Chemistry, supra,* wherein the crude CTFE telomer is reacted with successive portions of $CoF_3$ at temperatures up to 200°C until a total weight of $CoF_3$ approximating the weight of polymer has been added. During the reaction, fluorine is consumed by replacement reaction and the $CoF_3$ salt is converted to $CoF_2$. The stabilized reaction product is then extracted from the spent salt with carbon tetrachloride, filtered, and distilled to remove the carbon tetrachloride. The residue is further vacuum distilled to obtain a stabilized oil fraction as the finished polymer.

A variety of other fluorinating agents are also disclosed in the prior art. For instance, US—A—2,886,607 illustrates the use of antimony trifluoride in combination with antimony pentachloride to fluorinate various telomers of perchlorofluoroolefins, such as chlorotrifluoroethylene.

A series of patents assigned to the

M. W. Kellogg Company, GB—A—712,184 and GB—A—761,053, and US—A—2,636,908, are directed to the polymerization, cracking and subsequent fluorination of CTFE. Both of the aforementioned British Patents describe the polymerization and subsequent cracking of CTFE to produce oils of various molecular weights and boiling ranges, and the subsequent stabilization of the oils by fluorination with, in succession, chloride trifluoride followed by cobalt trifluoride as fluorinating agents.

US—A—2,636,908 describes similar polymerization and cracking procedures to produce CTFE oils, and the post-chlorination and fluorination of these oils to produce a fully stabilized product. The post-fluorination step is carried out using chlorine trifluoride or hydrofluoric acid as a fluorinating agent at temperatures ranging from 100°C to 300°C. The use of a catalyst or promoting agent for the fluorination process, such as cobalt trifluoride, is also disclosed.

Kirk-Othmer, Encyclopedia of Chemical Technology, Volume 10 (1983), page 863 describes the manufacture of chlorotrifluorocarbons by the successive replacement of chlorine by fluorine using hydrogen fluoride. Liquid phase processes using $SbF_5$ or $SbF_3$ and $Cl_2$ as catalysts are said to be being replaced by a vapor phase process using chromium oxide or halide, ferric chloride, of thorium tetrafluoride catalysts. DD—B—139940 is similar in suggesting the use of $SbCl_5$ as catalyst for liquid phase fluorination and $FeCl_3$ for gas phase fluorination.

The demand for chlorofluorinated lubricants such as those described herein has grown steadily in recent years due, in part, to an increase in applications where the flammability of existing products, such as hydraulic fluids, presents a potential safety hazard. It will therefore be readily appreciated that a continuing and growing need exists for improvements in existing processes which will provide for the more efficient and less expensive manufacture of these products on an industrial scale.

The present invention provides a process for stabilizing a chlorofluorinated telomer of the general formula

$$CCl_3(CF_2CFCl)_nCl$$

wherein n is from 1 to 20, which comprises fluorinating said telomer in the liquid phase with a fluorinating agent in the presence of a catalytic amount of, as fluorination catalyst, $FeCl_3$.

The fluorinating agent preferably comprises chlorine trifluoride ($ClF_3$), fluorine or hydrogen fluoride and chlorine.

The present process is conducted in at least one fluorination reactor, preferably maintained at from 120° to 250°C, and continues until the desired degree of fluorination is achieved. In one embodiment, a two-stage process is provided in which crude telomer is introduced into a fluorination reactor and fluorinated in accordance with the process of the invention and excess fluorinating agent from this reaction is then reacted with additional crude telomer in the presence of antimony pentachloride in a continuous recycle process.

Although several telomerization methods can be utilized for preparing the CTFE telomers, as illustrated hereinbefore, a particularly suitable method involves the reaction of carbon tetrachloride with CTFE in the presence of a catalytic amount of $FeCl_3$, benzoin as a reducing agent for $Fe^{+3}$ ions, and acetonitrile as a common solvent for the reactants, and catalysts. The telomerization reaction can be illustrated as follows:

$$CCl_4 + nCF_2{=}CFCl \xrightarrow[\text{Benzoin}]{FeCl_3} CCl_3(CF_2CFCl)_nCl$$

The telomerization reaction is generally carried out under elevated temperature and pressure conditions, with temperatures generally ranging from 90°C to 150°C, and pressures generally in the range of 0.34 to 2.8 MPa (50 p.s.i. to 400 p.s.i.). The telomer chain growth, and hence the average molecular number of the telomer (n), is dependent upon the relative concentration of the $Fe^{+3}$ ions in the solution, the rate at which the $Fe^{+3}$ ions are reduced to the $Fe^{+2}$ form, and the relative concentrations of the reactants. In accordance with the present invention, telomers having average molecular numbers of from 1 to 20, which vary in viscosity from light oils to greases, are used. The telomers are then stripped of unreacted monomer and solvent, and passed through a column of activated alumina to remove the benzoin. The preparation of such telomers is illustrated below in Example 1.

The crude CTFE telomer is then fluorinated to stabilize the end groups (primarily—$CCl_3$ groups), by replacement of chlorine atoms with fluorine, and to saturate any remaining olefinic impurities. The telomer is heated and maintained at elevated temperature, preferably from 120°C to 250°C, and most preferably from 150°C to 180°C. Fluorination occurs by introducing the fluorinating agent into the heated telomer mixture in the presence of the $FeCl_3$ fluorination catalyst.

The degree of fluorination of the end groups of the telomer will depend on several factors including the effectiveness of the fluorinating agent, the temperature of the reaction mixture, and the duration of the fluorination process. The structure of such stabilized telomers with various degrees of fluorination can be represented as shown below, where (2) represents the least fluorinated telomer, i.e. a single fluorine substitution, (3), (4), and (5) are progressively more highly fluorinated tolemers with two, three and four fluorine substitutions, respectively, and (6) represents the most highly fluorinated telomer with five fluorine substitutions.

$$CFCl_2(CF_2CFCl)_nCl \quad (2)$$

$CF_2Cl(CF_2CFCl)_nCl$ (3)

$CF_2Cl(CF_2CFCl)_{n-1}CF_2CF_2Cl$ (4)

$CF_3(CF_2CFCl)_{n-1}CF_2CF_2Cl$ (5)

$CF_3(CF_2CFCl)_{n-1}CF_2CF_3$ (6)

Although this invention embraces the use of a variety of fluorinating agents, such as elemental fluorine and hydrogen fluoride, chlorine trifluoride ($ClF_3$) is preferred due to its particular effectiveness in fluorinating CTFE telomers. Elemental fluorine is an effective fluorinating agent, but commercially prepared fluorine frequently contains minor amounts of oxygen which may form—COF end groups on the telomer chain during fluorination. Hydrogen fluoride is a comparatively inexpensive fluorinating agent, but it is not as effective as $ClF_3$.

The amount of fluorination catalyst required is not critical and amounts of from 0.1% to 10%, and preferably 0.5% to 5%, by weight of telomer are generally suitable.

The $FeCl_3$ fluorination catalyst is highly efficient for both fluorinating the end groups of the telomer and saturating the olefinic impurities. Moreover, $FeCl_3$ is fully compatible with the catalyst system used in the redox telomerization process.

$SbCl_5$ is highly efficient at fluorinating the end groups, and it is also soluble in the CTFE telomer, enabling fluorination to be carried out more efficiently and at lower temperatures in the two stage continuous recycle process described above. $SbCl_5$ is more expensive than $FeCl_3$ and has been found to be generally less efficient than $FeCl_3$ at saturating the olefinic impurities.

The embodiment of the present invention utilizing both $FeCl_3$ and $SbCl_5$ as fluorination catalyst will now be more particularly described by reference to the appended drawing.

As depicted in the drawing, a mixture of crude liquid CTFE telomer and about 1% $FeCl_3$ by weight is introduced into fluorination reactor *6* through line *4*. The mixture is stirred and heated in the reactor to approximately 165°C. Gaseous chloride trifluoride with nitrogen dilution is added to the mixture through line *2* and reacted for a sufficient period of time to produce a telomer having the desired degree of fluorination. The stabilized product is then fed to filter *28* through line *26* to remove iron catalyst and produce a purified product which can be withdrawn through line *30*.

Unreacted chloride trifluoride passes from reactor *6* into scrubber *10*, which is maintained at about 100°C, through line *8*. A fresh mixture of crude, liquid CTFE telomer and about 1% $SbCl_5$ by weight which has been added to holding tank *22* through line *16*, is withdrawn from the holding tank through line *32* and pumped into scrubber *10* by pumping means *24* where it is reacted with the chlorine trifluoride. The partially fluorinated telomer is then recycled to holding tank *22* through line *18*. The off gases from the scrubbing process, which may contain traces of fluorinated organics, are removed by line *12*, and reacted with sodium hydroxide to remove chlorine. Once the desired degree of fluorination is achieved, the stabilized telomer can be removed from the recycle stream through line *36* and treated with 50% aqueous HCl from line *34* in vessel *40*. The purified product can be withdrawn through line *42*.

The following examples are intended to further illustrate the present invention.

Example 1 illustrates the preparation of a crude CTFE telomer using the redox telomerization process.

Example 1

A 300 ml. autoclave was dried and purged with $N_2$ and charged with 60.0 grams of CTFE, 48.3 ml. of $CCl_4$, 26.1 ml. of $CH_3CN$, 0.486 grams of $FeCl_3$ and 0.774 grams of benzoin. The reaction mixture was heated to a temperature of about 110°C and stirred for about 2 hours. During this procedure, the pressure varied from 0,6—1,28 MPa (90 p.s.i. to 185 p.s.i.). The temperature was then allowed to fall to ambient and unreacted CTFE was removed. The contents were removed from the reactor and stripped to yield a product weighing 48.3 grams. The reaction mixture was treated with 150 ml. $CHCl_3$, filtered and stripped to yield 43.5 grams of telomer. The telomer was passed through a column of activated alumina to remove benzoin.

Examples 2 and 3 illustrate the fluorination of crude CTFE telomers using chlorine trifluoride and a variety of fluorination catalysts. The crude CTFE telomer product used in Examples 2 and 3 was prepared following the procedure of Example 1. Gas chromatography analysis of this product revealed the following distribution of telomers:

| Telomer | Amount % |
|---|---|
| $CCl_3(CF_2CFCl)Cl$ | 6.5 |
| $CCl_3(CF_2CFCl)_2Cl$ | 17.61 |
| $CCl_3(CF_2CFCl)_3Cl$ | 15.89 |
| $CCl_3(CF_2CFCl)_4Cl$ | 13.63 |
| $CCl_3(CF_2CFCl)_5Cl$ | 11.26 |
| $CCl_3(CF_2CFCl)_6Cl$ | 9.43 |
| $CCl_3(CF_2CFCl)_7Cl$ | 7.65 |
| $CCl_3(CF_2CFCl)_8Cl$ | 5.81 |
| $CCl_3(CF_2CFCl)_9Cl$ | 3.85 |
| $CCl_3(CF_2CFCl)_{10}Cl$ | 1.96 |
| $CCl_3(CF_2CFCl)_{11}Cl$ | Traces |

Example 2

A stirred mixture of 308 grams of the crude CTFE telomer product and 3.0 grams (0.019 moles) of $FeCl_3$ was heated to about 165°C in a 300 ml. autoclave provided with a gas inlet and outlet tube. 27 ml./minute of $ClF_3$ diluted with 40 ml./minute of $N_2$ was passed through the reaction mixture for about 3-1/2 hours. Following this, 9 ml./minute of $ClF_3$ diluted with 40 ml./minute of

$N_2$ was again passed through the reaction mixture for about 3 hours and 10 minutes.

The reactor was then cooled and the contents were removed from the reactor to give 273 grams of product. This produced was stirred with 1% by weight $Na_2CO_3$ for about 1/2 hour at about 60°C and filtered using a Whatman No. 1 filter to give 232 grams of product.

Analysis of this product using gas chromotagraphy revealed the following telomer end group distribution:

| Fluorine replacement | Amount % |
|---|---|
| None (0) | Traces |
| One (1) | 38 |
| Two (2) | 48 |
| Three (3) | 11 |

Example 3 (Comparison)

Following the procedure of Example 2, a reaction mixture of 102 grams of crude telomer product and 0.01 moles of $NiCl_2$ was heated to 165°C. 18 ml./minute of $ClF_3$ diluted with 40 ml./minute of $N_2$ was passed through the mixture for 50 minutes. This was followed by another 18 ml./minute of $ClF_3$ for about 55 minutes and 4.5 ml./minute of $ClF_3$ for about 2 hours, again diluted with 40 ml./minute of $N_2$.

Analysis of this product using gas chromatography revealed the following telomer end group distribution:

| Fluorine replacement | Amount % |
|---|---|
| None (0) | Traces |
| One (1) | 54 |
| Two (2) | 37 |
| Three (3) | 5 |

**Claims**

1. A process for stabilizing a chlorofluorinated telomer of the general formula

$$CCl_3(CF_2CFCl)_nCl$$

wherein n is from 1 to 20, which comprises fluorinating said telomer in the liquid phase with a fluorinating agent in the presence of a catalytic amount of, as fluorination catalyst, $FeCl_3$.

2. A process according to claim 1 wherein said fluorinating agent comprises chlorine trifluoride, fluorine or hydrogen fluoride and chlorine.

3. A process according to claim 1 or 2 wherein the fluorination reaction is conducted at a temperature of from 120°C to 250°C.

4. A process according to claim 3 wherein the fluorination reaction is conducted at a temperature of from 150°C to 180°C.

5. A process according to any one of the preceding claims wherein the fluorination catalyst is present in an amount of from 0.1% to 10% by weight of telomer.

6. A process according to claim 5 wherein the amount of fluorination catalyst is from 0.5% to 5% by weight of telomer.

7. A two-stage process for stabilizing a chlorotrifluoroethylene telomer, the first stage comprising fluorinating said telomer in accordance with a process as claimed in any one of claims 1 to 6 and the second stage comprising reacting excess fluorinating agent with additional chlorotrifluoroethylene telomer in the presence of a catalytic amount of $SbCl_5$.

**Patentansprüche**

1. Verfahren zur Stabilisierung eines Chlorfluor - Telomeren der allgemeinen Formel

$$CCl_3(CF_2CFCl)_nCl$$

worin n eine Zahl von 1 bis 20 bedeutet, durch Fluorierung eines solchen Telomers in flüssiger Phase mit einem Fluorierungsagens in Gegenwart einer katalytischen Menge von $FeCl_3$ als Fluorierungskatalysator.

2. Verfahren nach Anspruch 1, wobei das Fluorierungsagens Chlortriflourid, Fluor oder Fluorwasserstoff und Chlor ist.

3. Verfahren nach Anspruch 1 oder 2, wobei die Fluorierungsreaktion bei einer Temperatur zwischen 120°C und 250°C durchgeführt wird.

4. Verfahren nach Anspruch 3, wobei die Fluorierungsreaktion bei einer Temperatur zwischen 150°C und 180°C durchgeführt wird.

5. Verfahren nach einem der vorhergehenden Ansprüche, wobei der Fluorierungskatalysator in einer Menge von 0,1 bis 10 Gew.-% bezogen auf das Telomere vorliegt.

6. Verfahren nach Anspruch 5, wobei die Menge des Fluorierungskatalysators 0,5 bis 5 Gew.-% des Telomeren beträgt.

7. Zweistufiges Verfahren zur Stabilisierung eines Chlorotrifluoroethylen Telomeren, wobei in der ersten Stufe das Telomere gemäß einem Verfahren nach einem der Ansprüche 1 bis 6 fluoriert und in der zweiten Stufe überschüssiges Fluorierungsagens mit zusätzlichem Chlorotrifluoroethylen Telomeren in Gegenwart einer katalytischen Menge von $SbCl_5$ umgesetzt wird.

**Revendications**

1. Procédé pour stabiliser un télomère chlorofluoré de la formule générale:

$$CCl_3(CF_2CFCl)_nCl$$

dans laquelle n est compris entre 1 et 20, qui consiste à fluorer ce télomère en phase liquide avec un agent de fluorination en présence d'une quantité catalytique de $FeCl_3$, comme catalyseur de fluoration.

2. Procédé selon la revendication 1, dans lequel

l'agent de fluoration est du trifluorure de chlore, du fluor ou du fluorure d'hydrogène et du chlore.

3. Procédé selon la revendication 1 ou 2, dans lequel la réaction de fluoration est conduite à une température comprise entre 120 et 250°C.

4. Procédé selon la revendication 3, dans lequel la réaction de fluoration est conduite à une température de 150 à 180°C.

5. Procédé selon l'une quelconque des revendications précédentes, dans lequel la quantité de catalyseur de fluoration présent est comprise entre 0,1 et 10% en poids du télomère.

6. Procédé selon la revendication 5, dans lequel la quantité de catalyseur de fluoration présent est comprise entre 0,5 et 5% en poids du télomère.

7. Procédé en deux stades pour stabiliser un télomère de chlorotrifluoroéthylène, le premier stade consistant à fluorer le télomère selon un procédé selon l'une quelconque des revendications 1 à 6, et le deuxième stade consistant à faire réagir un agent de fluoration en excès avec le télomère de chlorotrifluoroéthylène additionnel en présence d'une quantité catalytique de $SbCl_5$.

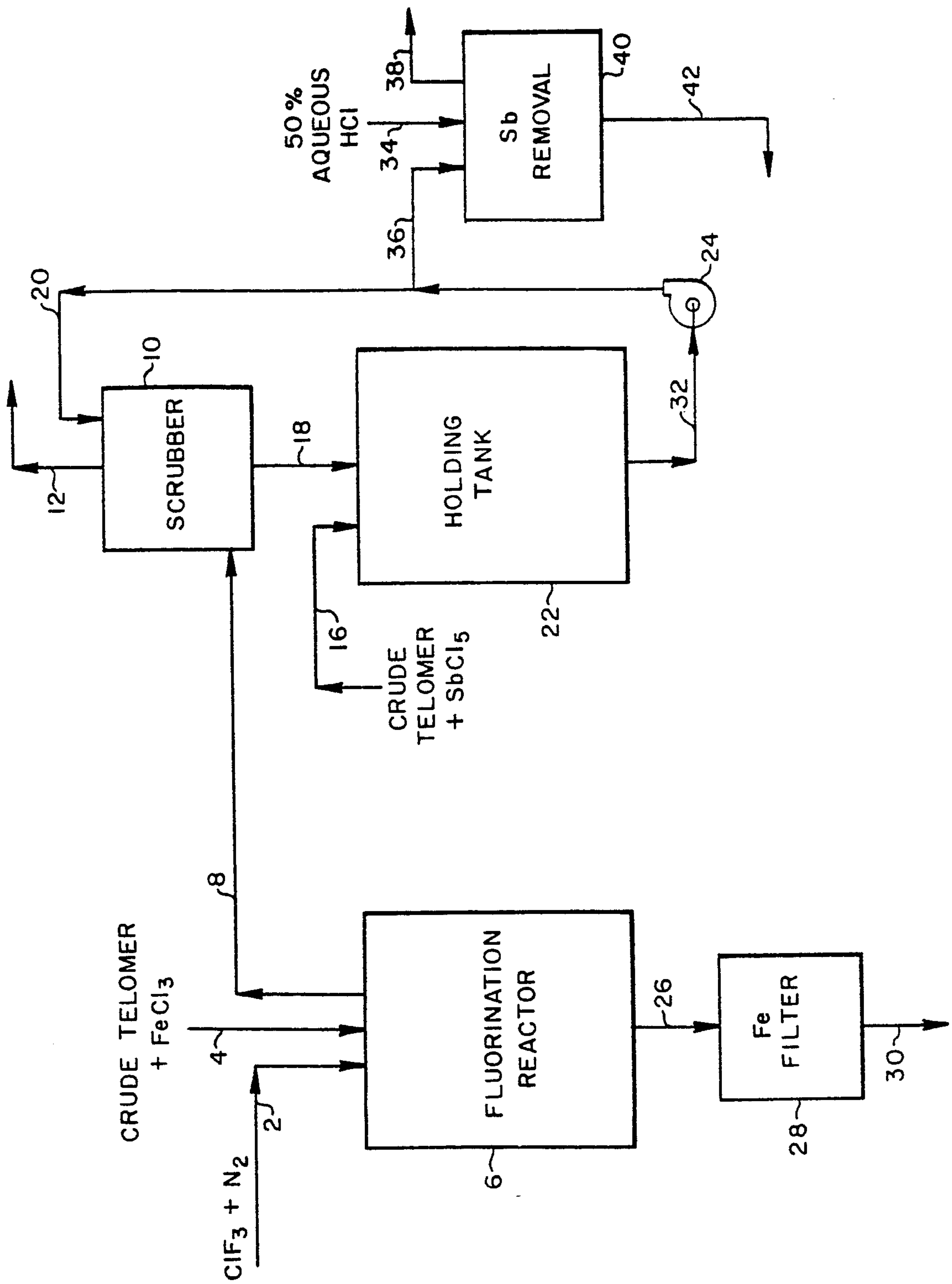
Sb REMOVAL
40
38
34
36
42
50% AQUEOUS HCl
20
24
SCRUBBER
10
12
18
HOLDING TANK
22
32
16
CRUDE TELOMER + $SbCl_5$
8
CRUDE TELOMER + $FeCl_3$
4
2
$ClF_3 + N_2$
FLUORINATION REACTOR
6
26
Fe FILTER
28
30